# FASCICULE DE BREVET EUROPEEN

(11) **EP 0 730 985 B1**
(45) Date de publication et mention de la délivrance du brevet: **22.07.1998**
(21) Numéro de dépôt: 96400318.0
(22) Date de dépôt: 16.02.1996
(51) Int. Cl.: B60B 7/00, B60B 3/00

(54) **Dispositif pour insonoriser une roue, et, notamment une roue de véhicule automobile**
Vorrichtung für Geräuschdämpfung eines Rades und insbesondere eines Fahrzeugrades
Device for sound damping of a wheel and in particular for a wheel of a motor vehicle

(30) Priorité: 06.03.1995 FR 9502531
(43) Date de publication de la demande: 11.09.1996
(73) Titulaire: SOLLAC S.A., 92800 Puteaux (FR)
(72) Inventeur: Marron, Guy, F-13120 - Gardanne (FR); Delessert, Jean-Paul, F-13127 - Vitrolles (FR)
(74) Mandataire: Ventavoli, Roger

(56) Documents cités:
- EP-A- 0 041 197
- EP-A- 0 542 712
- DE-A- 2 457 907
- DE-A- 4 301 778
- FR-A- 2 351 804
- GB-A- 2 163 103

## Description

La présente invention concerne un dispositif pour insonoriser une roue, et, notamment une roue de véhicule automobile, roue comprenant un voile central circulaire, une jante sensiblement cylindrique composée d'une partie arrière et d'une partie avant, les parties étant séparées par le plan du voile qui s'étend sensiblement perpendiculairement à l'axe longitudinal de la jante.

L'amélioration du confort des usagers de véhicules automobiles oblige les constructeurs de véhicules automobiles à rechercher sur lesdits véhicules les sources de vibrations et à tenter de les réduire ou, si possible, de les éliminer.

Dans le domaine des roues de véhicule automobile, les roues réalisées, par exemple, par emboutissage, fluotournage, ou par roulage, présentent l'inconvénient d'émettre des vibrations qui se répercutent au niveau de l'habitacle.

Les vibrations des roues génèrent un bruit qui peut être de type aérodynamique, à des fréquences supérieures à 500 Hz, ou de type solidien ou structurel à des fréquences inférieures à 500 Hz.

De nombreuses études ont porté sur une quantification de différents effets, notamment l'influence du dessin des sculptures des pneumatiques, du revêtement des chaussées, de la vitesse du véhicule, de l'acier dont est composée la roue.

On connaît du brevet FR N° 7615476, un dispositif de réduction du bruit d'une roue, lors du freinage, comprenant une lame élastique du type lame à ressort dont les points d'appui sont placés au niveau des ventres de vibration de la roue.

Un dispositif pour insonoriser une roue ayant les caractéristiques du préambule de la revendication 1 est décrit dans le document GB-A-2 163 103.

L'invention a pour but l'amélioration du confort acoustique des usagers de véhicules automobiles dans tous les domaines de fonctionnement du véhicule.

L'invention a pour objet un dispositif qui se caractérise en ce qu'il est composé d'au moins un panneau, associé à la jante, placé parallèlement au voile de roue, ledit panneau comportant au moins une couche de matériau viscoélastique et un moyen de couplage mécanique radial disposé en périphérie du panneau pour être associé à, au moins, une des parties cylindriques formées par la jante.

Les autres caractéristiques de l'invention sont :
- le panneau est un disque associé à la partie cylindrique avant de la jante,
- le panneau est une couronne associée à la partie cylindrique arrière de la jante,
- le panneau est métallique et de préférence en acier.
- le panneau est composé d'une tôle de type sandwich.
- le panneau constitue un enjoliveur pour la roue.
- le panneau comporte en périphérie un moyen de couplage mécanique de mise sous tension ou de compression radiale.
- le moyen de mise sous tension est un anneau élastique s'emboîtant de manière élastique dans une gorge ménagée dans une des parties cylindriques formées par la jante.
- le moyen de mise sous tension du panneau est composé d'une série de pattes en acier à ressort disposées radialement en périphérie dudit panneau est destinée à s'accrocher sur une bordure circulaire ménagée sur une des parties cylindriques formée par la jante.
- le panneau comporte, au moins, un relief disposé en vis-à-vis d'une zone de vibrations à grandes amplitudes de la roue, le relief étant destiné à prendre appui sur un relief du voile de la roue,
- le relief a, soit la forme d'au moins une rainure, soit la forme d'au moins une portion de cercle, soit la forme de plots répartis angulairement sur la surface du disque,

La description qui suit et les figures annexées, le tout donné à titre d'exemple non limitatif fera bien comprendre l'invention.

La figure 1 présente un exemple de réalisation d'un dispositif selon l'invention associé à une roue.

La figure 2 présente un autre exemple de réalisation d'un dispositif selon l'invention.

La figure 3 présente un exemple de réalisation d'un panneau selon l'invention en forme de disque.

La figre 4 est un schéma d'un banc de mesure de réponse impulsionnelle.

Les figures 5A et 5B sont des courbes de réponse impulsionnelle, respectivement en modes verticaux et en modes latéraux, d'une roue sans le dispositif de l'invention.

Les figures 6A et 6B sont des courbes de réponse impulsionnelle respectivement en modes latéraux et en modes verticaux d'une roue, avec le dispositif de l'invention composé d'un panneau en forme de disque comme représenté sur la figure 3.

Les figures 7A et 7B sont des courbes de réponse impulsionnelle, respectivement en modes latéraux et en modes verticaux d'une roue, avec le dispositif de l'invention composé d'un panneau en forme de disque et d'un panneau en forme de couronne associée.

La figure 8 présente un autre exemple de réalisation de l'invention, figure sur laquelle est représenté un moyen de couplage formé d'un anneau.

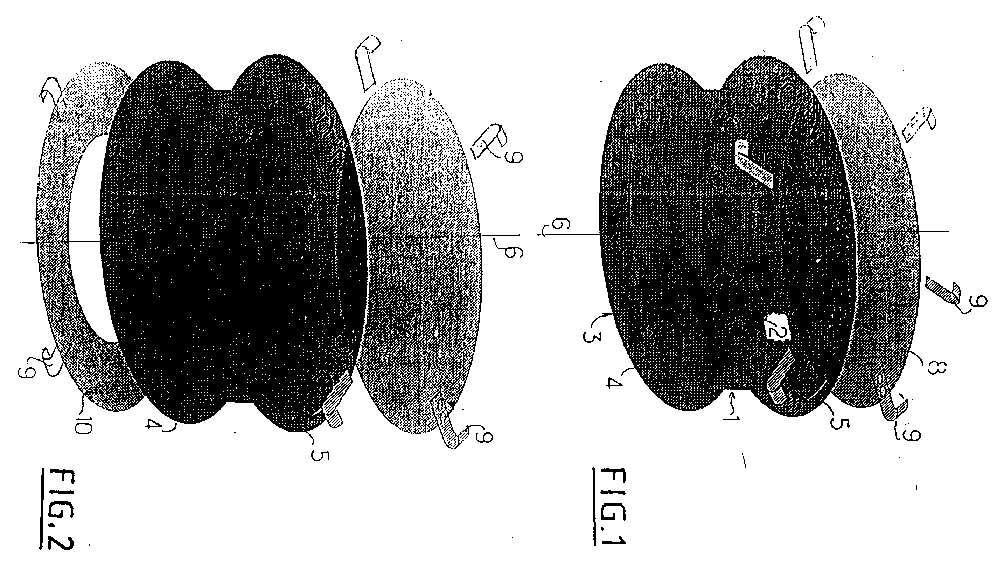

Le dispositif pour insonoriser une roue, par exemple, de véhicule automobile s'adapte sur une roue 1 de véhicule, comme représentée sur la figure 1, la roue comprenant un voile 2 central circulaire, une jante 3 sensiblement cylindrique composée d'une partie arrière 4 et d'une partie avant 5, les parties 4 et 5 étant séparées par le plan du voile 2 qui s'étend perpendiculairement à l'axe longitudinal 6 de la jante 3, axe correspondant à l'axe de rotation de la roue.

Selon l'invention, le dispositif pour insonoriser la roue est composé d'un panneau réalisé de préférence à partir d'une tôle, le panneau pouvant être obtenu par emboutissage et avoir la forme d'un disque 8 comme, par exemple, la forme d'une assiette, ou encore la forme d'une couronne 10.

Le panneau 7 comporte au moins une couche de matériau viscoélastique, matériau ayant la propriété d'absorber l'énergie due à des vibrations mécaniques, cette énergie étant transformée, dans la masse du matériau, en chaleur. La couche de matériau viscoélastique peut être insérée entre deux disques métalliques pour former une structure sandwich.

Le panneau du dispositif comporte des moyens de couplage mécanique avec la jante 3 de la roue. Ces moyens de couplage placent le panneau sous compression radiale ou bien sous tension radiale de façon à ce que les vibrations de la roue puissent être transmises au matériau viscoélastique du panneau du dispositif pour obtenir l'effet d'absorption d'énergie.

Un moyen de couplage mécanique est, par exemple, un anneau élastique qui s'emboîte de manière élastique dans une gorge ménagée dans une partie cylindrique formée par la jante.

L'anneau est, par exemple, un bord roulé 16 en périphérique du panneau.

Un autre moyen de couplage mécanique est, par exemple, comme représenté sur les figures 1 et 2, composé d'une série de pattes 9 en acier à ressort disposées radialement en périphérie du panneau du dispositif, les pattes 9 étant destinées à s'accrocher sur une bordure circulaire ménagée sur une des parties cylindriques 4, 5 formées par la jante 3.

Selon l'invention le panneau en forme de disque 8 du dispositif est placé sur la roue de façon à couvrir les moyens de fixation de la roue sur l'axe de roue. Le disque 8 peut avoir de ce fait une forme esthétique et une fonction d'enjoliveur.

Selon l'invention, et comme représenté sur la figure 2, le dispositif peut comporter deux panneaux formant d'une part, un disque 8 placé sur la partie avant 5 de la jante et d'autre part, une couronne 10 placée sur la partie arrière 4 de la jante.

Des mesures ont été effectuées pour mettre en évidence l'effet d'absorption de l'énergie vibratoire communiquée à une roue de véhicule automobile.

Ces mesures ont été effectuées avec un dispositif comportant un moyen de couplage mécanique, sous compression, comme représenté sur les figures 1 et 2.

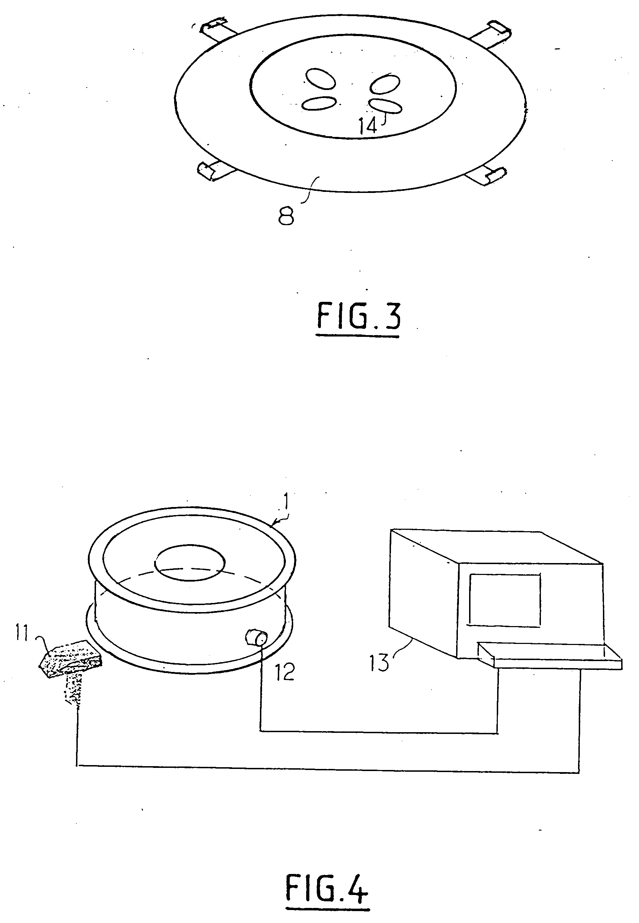

Une roue 1 de véhicule automobile est soumise à vibrations de façon à matérialiser les modes de vibrations de la roue, d'une part, sans le dispositif de l'invention et, d'autre part, avec ledit dispositif de l'invention comportant un panneau en forme de disque 8 , comme représenté sur la figure 3.

Un banc expérimental de mesure de fréquence propre et de niveau de bruit est présenté schématiquement sur la figure 4. Le banc de mesure comporte un marteau 11 d'impact, un accéléromètre 12, un capteur de force et un analyseur 13 spectral bi-voies. Ce banc permet de déterminer des courbes de réponse impulsionnelle de la roue 1 soumise à vibrations.

Le dispositif associé à la roue est composé d'un panneau en forme de disque 8 embouti à partir d'une tôle sandwich du type "SOL CONFORT" ayant une épaisseur de 0,75 mm. Le panneau en forme de disque du dispositif est percé par exemple de quatre ajourages 14 ménagés dans sa partie centrale. Le panneau présente un galbe qui s'appuie sur la partie avant 5 cylindrique formée par la jante. Le disque 8 est fixé en compression mécanique au moyen de pattes 9 en acier à ressort formant des clips s'insérant dans une gorge intérieure de la partie avant 5 de la jante.

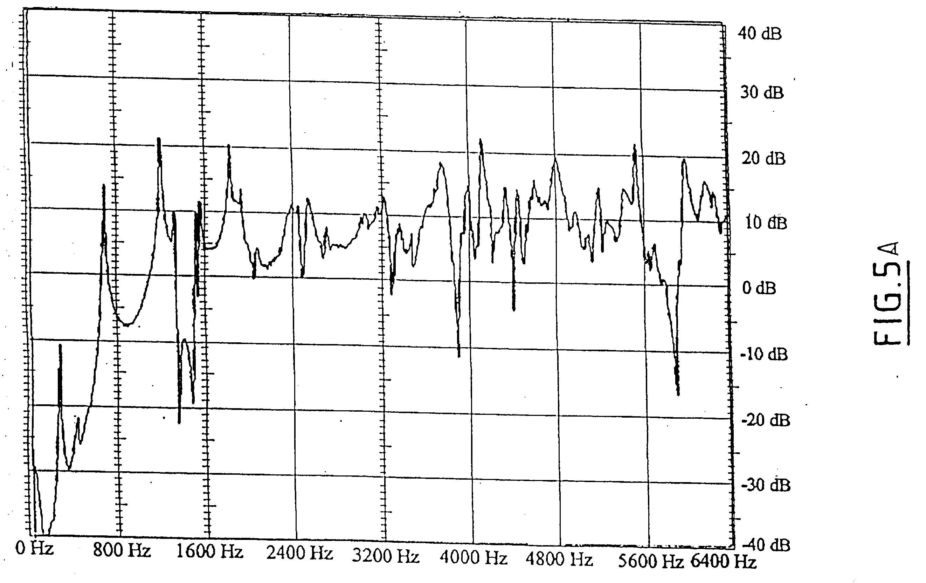

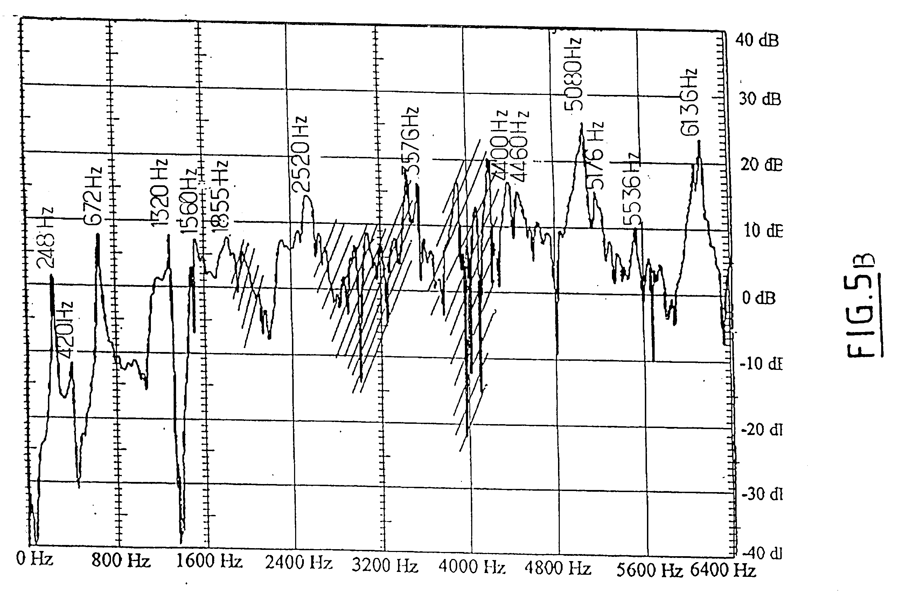

Les figures 5A et 5B, présentent des courbes de réponse impulsionnelle de la roue, respectivement en modes verticaux et en modes latéraux, sans le dispositif de l'invention. Il est mis en évidence les pics de résonance suivants :

| **Mode** | **Fréquence (Hz)** | **Mode** | **Fréquence (Hz)** |
|---|---|---|---|
| 1 | 253 | 6 | 719 |
| 2 | 253 | 7 | 719 |
| 3 | 253 | 8 | 1 094 |
| 4 | 258 | 9 | 1 140 |
| 5 | 498 | 10 | 1 140 |

Ce sont, en particulier, les modes de vibration à basses fréquences que l'on cherche à réduire, voire à faire disparaître. On a remarqué que la jante est l'élément le plus influent de la roue, et plus particulièrement les parties arrières et avant de la jante.

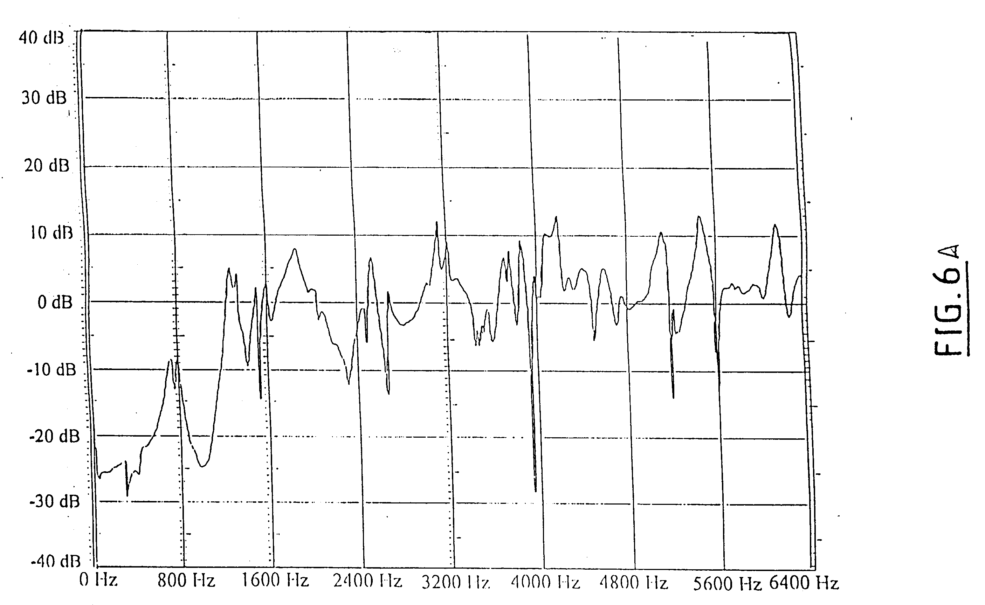

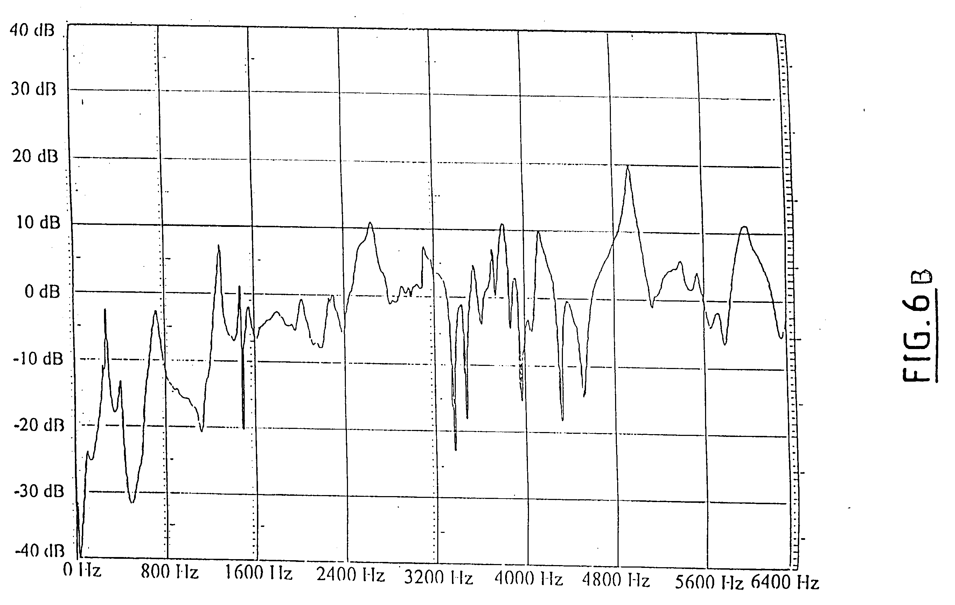

Les figures 6A et 6 B présentent des courbes de réponse impulsionnelle de la roue, respectivement en modes verticaux et en modes latéraux avec le dispositif selon l'invention composé, dans cet exemple, d'un panneau en forme de disque 8.

On remarque en comparant les deux courbes de réponse impulsionnelle en modes verticaux que le pic de résonance de 250 Hz est atténué d'environ 15 dB et que le pic de résonance de 700 Hz est atténué d'environ 23 dB, ce qui est considérable. Certains pics de résonance de hautes fréquences ont tendance à s'effacer. On observe également un léger décalage des pics vers les fréquences plus élevées, ce qui montre que le dispositif, en compression radiale tend à rigidifier la roue.

La comparaison des réponses impultionnelles de la roue, en modes latéraux sans le dispositif et avec le dispositif selon l'invention, montre que le pic de résonance de 250 Hz est atténué d'environ 7 dB et celui de 700 Hz est également atténué de 15 dB.

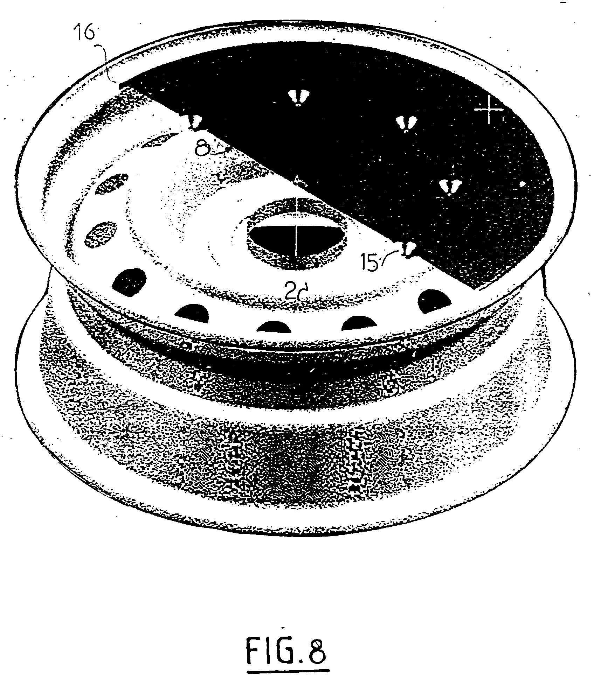

Il est possible de réaliser sur le panneau en forme de disque 8, comme représenté sur la figure 8 , au moins un relief 15 destiné, de manière préférentielle, à prendre appui sur un relief du voile 2 de la roue. Le relief est placé en vis à vis de zones de vibration du voile soumises à grandes amplitudes et qui représentent des ventres de vibration. Les reliefs représentés sur la figure 8 ont la forme de plots répartis angulairement sur la surface du disque 8. Ces reliefs peuvent également avoir la forme de rainure ou toutes autres formes embouties assurant, d'une part une fonction mécanique, et, d'autre part une fonction esthétique d'enjoliveur.

Le relief 15 peut également, sous une forme particulière, modifier le comportement vibratoire du panneau en générant des zones de vibrations de faibles amplitudes, appelées généralement noeuds de vibration. Sous cette forme, la mise en contact du relief 15 avec un relief du voile 2 de la roue n'est plus nécessaire.

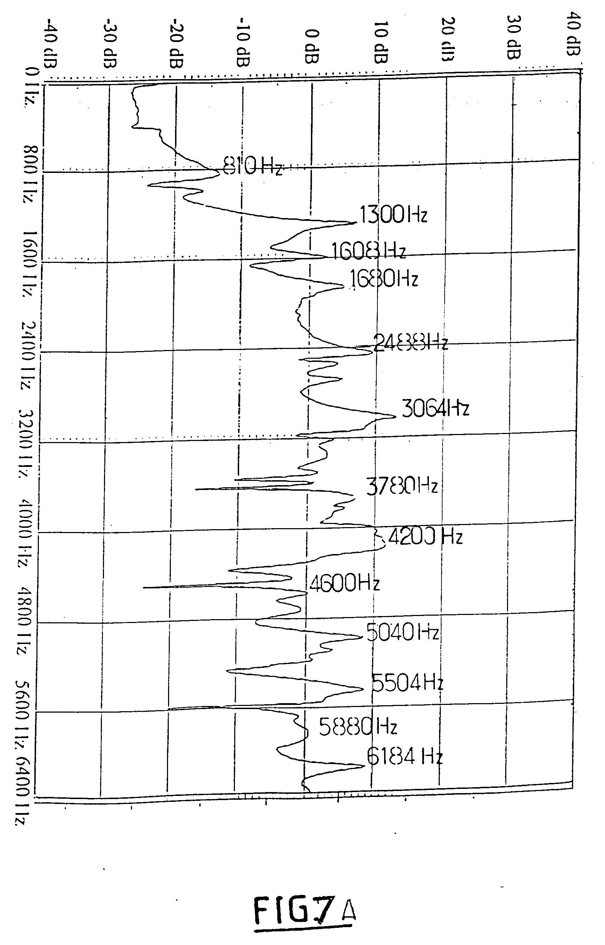

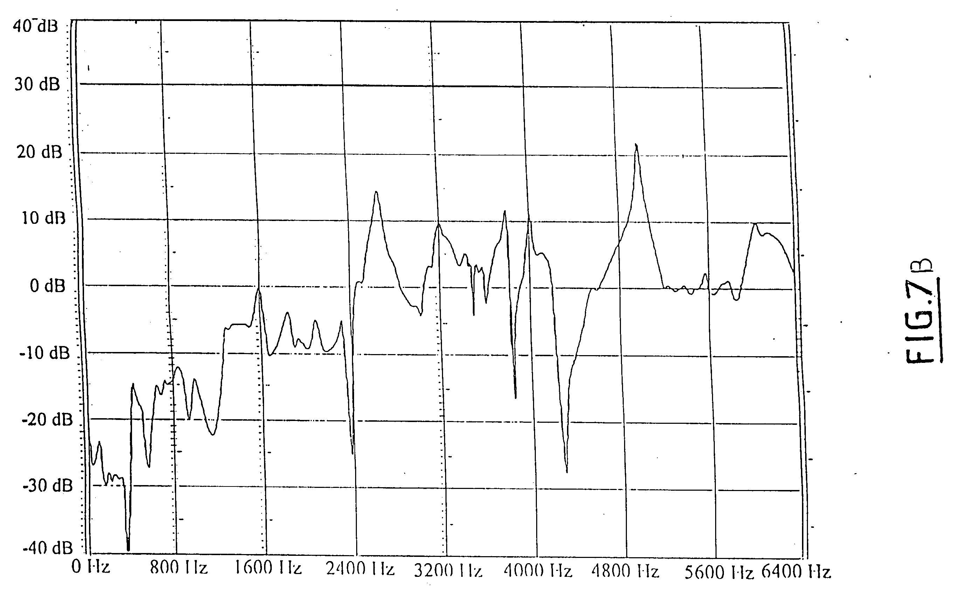

Les figures 7A et 7B présentent des courbes de réponse impulsionnelle de la roue, respectivement en modes verticaux et en modes latéraux avec le dispositif selon l'invention composé, dans cet exemple, d'un panneau en forme de disque 8 placé sur la partie avant 5 de la jante, et un panneau en forme de couronne 10 placé sur la partie arrière 4 de la jante.

Le panneau en forme de couronne 10 est circulaire, de diamètre intérieur de 250 mm et de diamètre extérieur de 342 mm. ll est fixé sur la partie arrière 4 de la jante au moyen de pattes 9 permettant une contrainte radiale importante. Des mesure d'impact ont été effectuées avec un marteau d'impact tel que décrit précédemment.

Dans le domaine des modes latéraux, il est constaté :
- une atténuation de 25 dB du pic de résonance qui apparaît à la fréquence de 250 Hz.
- une atténuation de 10 dB du pic de résonance qui apparait à la fréquence de 700 Hz.

Dans le domaine des modes verticaux, il est constaté :
- une atténuation de 5 dB du pic de résonnance qui apparait à la fréquence de 250 Hz,
- une atténuation de 5 dB du pic de résonance qui apparait à la fréquence de 700 Hz.

On remarque une disparition complète des pics de résonance dans les basses fréquences, qui sont les plus gênants pour les passagers de véhicules automobiles.

On observe également un léger décalage des pics de résonance vers les hautes fréquences, ce qui signifie que le dispositif selon l'invention apporte à la roue une amélioration de sa rigidité.

## Revendications

1. Dispositif pour insonoriser une roue, et, notamment une roue (1) de véhicule automobile, roue comprenant un voile (2) central circulaire, une jante (3) sensiblement cylindrique composée d'une partie arrière (4) et d'une partie avant (5), les parties étant séparées par le plan du voile (2) qui s'étend sensiblement perpendiculairement à l'axe longitudinal (6) de la jante, dispositif composé, d'au moins, un panneau, associé à la jante (3), placé parallèlement au voile (2) de roue, et un moyen de couplage mécanique radiale disposé en périphérie du panneau pour être associé à au moins une des parties (4 et 5 ) cylindriques de la jante (3), caractérisé en ce que ledit panneau comporte au moins une couche d'un matériau viscoélastique.

2. Dispositif selon la revendication 1, caractérisé en ce que le panneau est un disque (8) associé à la partie cylindrique avant (5) de la jante.

3. Dispositif selon la revendication 1, caractérisé en ce que le panneau est une couronne (10) associée à la partie cylindrique arrière (4) de la jante.

4. Dispositif selon les revendications 1 à 3, caractérisé en ce que le panneau est métallique.

5. Dispositif selon les revendications 1 à 4, caractérisé en ce que le panneau est en acier.

6. Dispositif selon les revendications 1 à 5, caractérisé en ce que le panneau est composé d'une tôle de type sandwich.

7. Dispositif selon les revendications, 1 à 6 caractérisé en ce que le panneau constitue un enjoliveur pour la roue.

8. Dispositif selon les revendications 1 à 7, caractérisé en ce que le panneau comporte en périphérie un moyen de couplage mécanique de mise sous tension ou de compression radiale.

9. Dispositif selon les revendications 1 à 7, caractérisé en ce que le moyen de mise sous tension est un anneau élastique s'emboîtant de manière élastique dans une gorge ménagée dans une des parties cylindriques formées par la jante.

10. Dispositif selon les revendications 1 à 7, caractérisé en ce que le moyen de mise sous tension du panneau est composé d'une série de pattes (9) en acier à ressort, disposées radialement en périphérie dudit panneau, et destinée à s'accrocher sur une bordure circulaire ménagée sur une des parties cylindriques formée par la jante.

11. Dispositif selon les revendications 1 à 10, caractérisé en ce que le panneau comporte au moins un relief (15) disposé en vis-à-vis d'une zone de vibrations à grandes amplitudes de la roue, le relief étant destiné à prendre appui sur un relief du voile (2) de la roue.

12. Dispositif selon la revendication 11, caractérisé en ce que le relief a, soit la forme d'au moins une rainure, soit la forme d'au moins une portion de cercle, soit la forme de plots répartis angulairement sur la surface du disque(8).

## Claims

1. Device for sound-proofing a wheel, and especially a motor-vehicle wheel (1), which wheel comprises a circular central body (2), a substantially cylindrical rim (3) composed of a rear part (4) and a front part (5), the parts being separated by the plane of the body (2) which extends substantially perpendicularly to the longitudinal axis (6) of the rim, the device being composed of at least one panel, associated with the rim (3) and placed parallel to the wheel body (2), and a radial mechanical coupling means arranged at the periphery of the panel in order to be associated with at least one of the cylindrical parts (4, 5) of the rim (3), characterized in that the said panel includes at least one layer of a viscoelastic material.

2. Device according to Claim 1, characterized in that the panel is a disc (8) associated with the front cylindrical part (5) of the rim.

3. Device according to Claim 1, characterized in that the panel is a ring (10) associated with the rear cylindrical part (4) of the rim.

4. Device according to Claims 1 to 3, characterized in that the panel is metallic.

5. Device according to Claims 1 to 4, characterized in that the panel is made of steel.

6. Device according to Claims 1 to 5, characterized in that the panel is composed of a sandwich-type metal sheet.

7. Device according to Claims 1 to 6, characterized in that the panel forms an embellisher for the wheel.

8. Device according to Claims 1 to 7, characterized in that the panel includes, at the periphery, a mechanical coupling means for putting the panel into radial tension or compression.

9. Device according to Claims 1 to 7, characterized in that the tensioning means is an annular elastic element fitting elastically in a well provided in one of the cylindrical parts formed by the rim.

10. Device according to Claims 1 to 7, characterized in that the means for tensioning the panel is composed of a series of tabs (9) made of spring steel, these being arranged radially at the periphery of the said panel and intended to be hooked over a circular border provided on one of the cylindrical parts formed by the rim.

11. Device according to Claims 1 to 10, characterized in that the panel includes at least one relief (15) arranged so as to face a region of high-amplitude vibration of the wheel, this relief being intended to bear against a relief on the wheel body (2).

12. Device according to Claim 11, characterized in that the relief has either the shape of at least one groove, taking the form of at least one portion of a circle, or the shape of studs distributed angularly over the surface of the disc (8).

## Patentansprüche

1. Vorrichtung zur Schalldämpfung eines Rades und insbesondere eines Kraftfahrzeugrades (1), wobei das Rad einen zentralen kreisrunden Körper (2) und eine im wesentlichen zylindrische Felge (3) umfaßt, die aus einem hinteren Teil (4) und einem vorderen Teil (5) besteht, wobei die Teile durch die Ebene des Körpers (2) getrennt sind, die sich im wesentlichen senkrecht zur Längsachse (6) der Felge erstreckt, wobei die Vorrichtung aus wenigstens einer Platte, die mit der Felge (3) verbunden ist und parallel zum Radkörper (2) angeordnet ist, und einem Mittel zur radialen mechanischen Kupplung besteht, das am Umfang der Platte angeordnet ist, um mit wenigstens einem der von der Felge (3) gebildeten zylindrischen Teile (4 und 5) verbunden zu werden, dadurch gekennzeichnet, daß diese Platte wenigstens eine Schicht aus einem viskoelastischen Material umfaßt.

2. Vorrichtung nach Anspruch 1, dadurch gekennzeichnet, daß die Platte eine Scheibe (8) ist, die mit dem vorderen zylindrischen Teil (5) der Felge verbunden wird.

3. Vorrichtung nach Anspruch 1, dadurch gekennzeichnet, daß die Platte ein Kranz (10) ist, der mit dem hinteren zylindrischen Teil (4) der Felge verbunden wird.

4. Vorrichtung nach den Ansprüchen 1 bis 3, dadurch gekennzeichnet, daß die Platte metallisch ist.

5. Vorrichtung nach den Ansprüchen 1 bis 4, dadurch gekennzeichnet, daß die Platte aus Stahl ist.

6. Vorrichtung nach den Ansprüchen 1 bis 5, dadurch gekennzeichnet, daß die Platte aus einem Blech vom Sandwich-Typ besteht.

7. Vorrichtung nach den Ansprüchen 1 bis 6, dadurch gekennzeichnet, daß die Platte eine Zierkappe für das Rad bildet.

8. Vorrichtung nach den Ansprüchen 1 bis 7, dadurch gekennzeichnet, daß die Platte am Umfang ein Mittel zur mechanischen Kupplung durch Unterspannungsetzen oder radialen Druck aufweist.

9. Vorrichtung nach den Ansprüchen 1 bis 7, dadurch gekennzeichnet, daß das Mittel zum Unterspannungsetzen ein elastischer Ring ist, der sich elastisch in eine Nut einfügen läßt, die in einem der von der Felge gebildeten zylindrischen Teile vorgesehen ist.

10. Vorrichtung nach den Ansprüchen 1 bis 7, dadurch gekennzeichnet, daß das Mittel zum Unterspannungsetzen der Platte aus einer Reihe von Klauen (9) aus Federstahl besteht, die radial am Umfang der Platte angeordnet sind und dazu bestimmt sind, sich an einem kreisrunden Rand festzuhaken, der an einem der von der Felge gebildeten zylindrischen Teile vorgesehen ist.

11. Vorrichtung nach den Ansprüchen 1 bis 10, dadurch gekennzeichnet, daß die Platte wenigstens ein Relief (15) umfaßt, das gegenüber einer Schwingungszone des Rades mit großen Amplituden angeordnet ist, wobei das Relief dazu bestimmt ist, auf einem Relief des Radkörpers (2) zur Anlage zu kommen.

12. Vorrichtung nach Anspruch 11, dadurch gekennzeichnet, daß das Relief entweder die Form wenigstens einer Rille oder die Form wenigstens eines Kreisabschnitts oder die Form von Klötzchen besitzt, die winkelig auf der Oberfläche der Scheibe (8) verteilt sind.
